# EUROPÄISCHE PATENTSCHRIFT

(11) **EP 3 184 322 B1**
(45) Veröffentlichungstag und Bekanntmachung des Hinweises auf die Patenterteilung: **12.09.2018**
(21) Anmeldenummer: 16202835.1
(22) Anmeldetag: 08.12.2016
(51) Int. Cl.: B44B 5/00

(54) **KUNSTSTOFFBUCHSE FÜR EINE PRÄGEVORRICHTUNG IN EINER FALTSCHACHTEL-KLEBEMASCHINE**
PLASTIC SOCKET FOR A STAMPING DEVICE IN A FOLDING BOX GLUEING MACHINE
MANCHON EN PLASTIQUE POUR UN ESTAMPEUR DANS UNE MACHINE DESTINÉE À COLLER DES BOÎTES PLIANTES

(30) Priorität: 22.12.2015 DE 102015122525
(43) Veröffentlichungstag der Anmeldung: 28.06.2017
(73) Patentinhaber: Masterwork Group Co., Ltd., Beichen Science and Technology Area Tianjin (CN); Masterwork Machinery GmbH, 41468 Neuss (DE)
(72) Erfinder: Torka, Klaus, 41069 Mönchengladbach (DE); Schmid, Frank Matthias, 47807 Krefeld (DE); Ollek, Thomasz, 40595 Düsseldorf (DE)
(74) Vertreter: Strehl Schübel-Hopf & Partner

(56) Entgegenhaltungen:
- WO-A1-03/045680
- DE-A1- 2 853 594
- DE-A1- 10 051 239
- DE-A1-102012 013 757
- DE-A1-102013 004 338
- US-A1- 2014 113 784

## Beschreibung

Bei vielen Verpackungen ist es Vorschrift, dass wesentliche Informationen auch in Blindenschrift auf der Verpackung aufgeprägt sind. Dies gilt insbesondere für Faltschachteln, die zur Verpackung von Arzneimitteln aller Art weit verbreitet sind.

In der Herstellung derartiger Faltschachteln werden sogenannte Faltschachtel-Klebemaschinen eingesetzt, die einen vorgefertigten Karton-Zuschnitt an definierten Stellen falten und kleben, damit er in einem späteren Verfahrensschritt zur Schachtel in der gewünschten Verpackungsform zusammengesteckt wird. Für das Aufbringen der erforderlichen Informationen in Blindenschrift wird ein Prägewerkzeug eingesetzt, das insbesondere eine Prägewalze umfasst, die auf einer mit einem Antrieb versehenen Welle drehbar gelagert ist. Durch Aufdrücken der reliefartig konturierten Walzenoberfläche mit der Information in Blindenschrift gegen den auf einer Gegenwalze gelagerten Karton-Zuschnitt lässt sich die erforderliche Information in Blindenschrift in einem Verarbeitungsschritt der Faltschachtelherstellung automatisiert auf den Karton-Zuschnitt aufbringen bzw. in diesen einprägen.

Problematisch in diesem Zusammenhang stellt sich vor allem das axiale Umpositionieren der am Prägeprozess beteiligten Prägewerkzeuge dar, wenn bei einem sogenannten Jobwechsel die Faltschachtel-Klebemaschine umgerüstet werden muss. Dann muss nach der Verarbeitung eines ersten Jobs für eine bestimmte erste Faltschachtelart mit erster Blindenschriftinformation auf einen zweiten Job für eine andere Blindenschriftinformation umgestellt werden. Dazu werden die Prägewerkzeuge auf der Drehwelle axial verschoben, um die für den zweiten Job erforderlich neue axiale Position zu erreichen. Dieser Vorgang ist bei den herkömmlichen Prägevorrichtungen gemäß dem Stand der Technik zeitaufwendig und mühsam, wie im Folgenden genauer erläutert werden wird.

Zum einen ist es bekannt, die Prägewalzen durch Schraubverbindungen fest an der Welle zu fixieren. Diese beispielsweise in US 5 074 180 A für ein Schneidwerkzeug gezeigte Befestigungsart minimiert zwar das radiale Spiel zwischen Welle und Prägewerkzeug, ist aber durch einen großen Zeitaufwand gekennzeichnet, weil bei einer Neupositionierung der Prägewerkzeuge mehrere Schrauben gelöst und wieder angezogen werden müssen.

Außerdem bekannt ist die axiale Fixierung der Prägewalzen durch einen oder mehrere Klemmringe, die an der Drehwelle neben dem Prägewerkzeug angeordnet sind und beispielsweise über Radialschrauben an der Drehwelle fixiert sind. Eine solche Fixierungsmethode ist beispielsweise in US 2005/0217447 A1 für ein Schneidwerkzeug gezeigt. Auch hier sind bei einem Jobwechsel mehrere Schrauben zu lösen und wieder festzuziehen, was sich negativ auf die Umstellzeiten der Faltschachtel-Klebemaschine auswirkt.

Eine weitere bekannte Lösung besteht in einer Keilklemmung des Prägewerkzeugs auf der Drehwelle. Eine solche, beispielsweise in DE 10 2012 013 757 A1 gezeigte Keilklemmung lässt sich zwar im Vergleich zu den bisher beschriebenen herkömmlichen Welle/Nabe-Verbindungstechniken leichter und schneller lösen, führt aber oft zu einer unerwünschten axialen Verschiebung zwischen Prägewerkzeug und Welle. Außerdem erlaubt sie kein axiales Verschieben in der fixierten Arbeitsposition des Werkzeugs sondern erst nach einem Lösen der Fixierung.

Die Aufgabe der vorliegenden Erfindung besteht darin, die oben beschriebenen Nachteile zu überwinden und eine Prägevorrichtung für eine FaltschachtelKlebemaschine zu schaffen, bei der die Prägewerkzeuge radial nahezu spielfrei auf der Welle sitzen und dennoch bei einem Jobwechsel leicht in axialer Richtung umpositioniert werden können.

Die Aufgabe wird durch die Prägevorrichtung gemäß dem beigefügten Anspruch 1 gelöst. Die Unteransprüche betreffen bevorzugte Ausführungsbeispiele.

Erfindungsgemäß wird zwischen der Drehwelle und dem die Prägewalze aufweisenden Prägewerkzeug eine Buchse vorgesehen, deren Abmessungen und Materialeigenschaften am Innen- und/oder Außenumfang so gewählt sind, dass die Buchse fest am Prägewerkzeug sitzt, während ein axiales Bewegen der Buchse entlang der Drehwelle möglich bleibt. Eine axiale Verschiebbarkeit entlang der Welle bleibt also mit dosiertem Kraftaufwand auch dann möglich, wenn das Prägewerkzeug in seiner radial fixierten Arbeitsposition ist. Erfindungsgemäß gelingt das durch eine Presspassung der Buchse zwischen Prägewerkzeug und Welle, wobei gleichzeitig die Reibungseigenschaften des Buchsen-Kunststoffmaterials auf der (üblicherweise aus Stahl hergestellten) Drehwelle dennoch gut genug sind, um ein axiales Umpositionieren der Buchse (mit dem fest darauf sitzenden Prägewerkzeug) entlang der Drehwelle bei einem Jobwechsel zu ermöglichen.

Das Prägewerkzeug weist eine zentrische Bohrung mit einem Halteabschnitt auf, in dem die Kunststoffbuchse aufgenommen ist. Der Halteabschnitt weist eine Form auf, die zur Aufnahme und radialen Sicherung der Buchse geeignet ist. Die Presspassung zwischen der Buchse und der Welle zum einem und zwischen der Buchse und dem Halteabschnitt zum anderen gelingt vorzugsweise durch Übermaßpassung und Formschluss. Die Querschnittsform der Buchse ist sowohl an ihrem Innenumfang als auch an ihrem Außenumfang an die Querschnittsform der Welle bzw. des Halteabschnitts im Prägewerkzeug angepasst und so dimensioniert, dass sie selbst bei Zugrundelegung großzügiger Fertigungstoleranzen aller beteiligten Bauteile eine feste formschlüssige Verbindung zwischen der Welle und dem Prägewerkzeug erzielt.

Die dafür erforderliche Elastizität weist die Buchse aufgrund der Materialeigenschaften des dafür verwendeten Kunststoffs auf. Diese kann noch dadurch unterstützt werden, dass die Buchse axiale Bohrungen aufweist, die eine radiale Verformung der Buchse erleichtern. Insgesamt sitzt das Prägewerkzeug durch die zwischengelagerte Buchse so fest auf der Welle, dass sich das Werkzeug spielfrei mit der Welle dreht.

Als Kunststoffmaterial für die Buchse wird vorzugsweise ein teilkristalliner, thermoplastischer Kunststoff mit geringem Gleitreibungskoeffizienten (µ ≤ 0,5 gegen Stahl) verwendet. Besonders geeignet sind Gusspolyamide. Diese Werkstoffe weisen nicht nur die erforderliche Verformbarkeit für die oben erläuterte Presspassung in radialer Richtung auf, sondern zeichnen sich außerdem durch einen ausreichend niedrigen Gleitreibungskoeffizienten gegenüber Stahl aus. Die niedrige Reibung und die genau auf den Querschnitt der Welle abgestimmte Form der Buchse an ihrem Innenumfang ermöglichen ein axiales Verschieben der Buchse mit dem darauf sitzenden Prägewerkzeug entlang der Drehwelle, ohne dass zuvor Befestigungsmittel wie Radialschrauben oder dergleichen mechanisch gelöst werden müssten. Dadurch wird ein wesentlicher Zeitgewinn bei einem Jobwechsel erzielt.

Der Halteabschnitt in der zentrischen Bohrung des Prägewerkzeugs ist vorzugsweise gezahnt, während die Kunststoffbuchse an ihrem Außenumfang eine glatte Mantelfläche aufweist. Die Zahnung des Halteabschnitts begünstigt einen festen Sitz der Buchse im Halteabschnitt in Presspassung und erlaubt einen relativ großen Toleranzbereich für den Unterschied zwischen dem Innendurchmesser des Halteabschnitts und dem Außendurchmesser der Kunststoffbuchse. Dadurch lassen sich besonders große Fertigungstoleranzen für die Bemaßung dieser beiden Bauteile hinnehmen, wodurch die Herstellung der erfindungsgemäßen Prägevorrichtung insgesamt einfacher und kostengünstiger ist. Auch die Übermaßpassung zwischen dem Außenumfang der Drehwelle und dem Innenumfang der Buchse erlaubt aufgrund der Verformbarkeit des Buchsenmaterials relativ große Fertigungstoleranzen.

Im Folgenden wird ein Ausführungsbeispiel der Erfindung unter Bezugnahme auf die beigefügten Zeichnungen im Detail erläutert. Darin zeigt:
Figur 1 eine perspektivische Ansicht der Bestandteile der Prägevorrichtung gemäß dem Ausführungsbeispiel der vorliegenden Erfindung von schräg vorne, Figur 2 eine perspektivische Ansicht der Kunststoffbuchse,
Figur 3 eine perspektivische Seitenansicht des Prägewerkzeugs von hinten,
Figur 4 eine perspektivische Teilansicht der Prägevorrichtung in zusammengesetztem Zustand von schräg vorne, und
Figur 5 eine Querschnittsansicht entlang der Linie V-V der Figur 4.

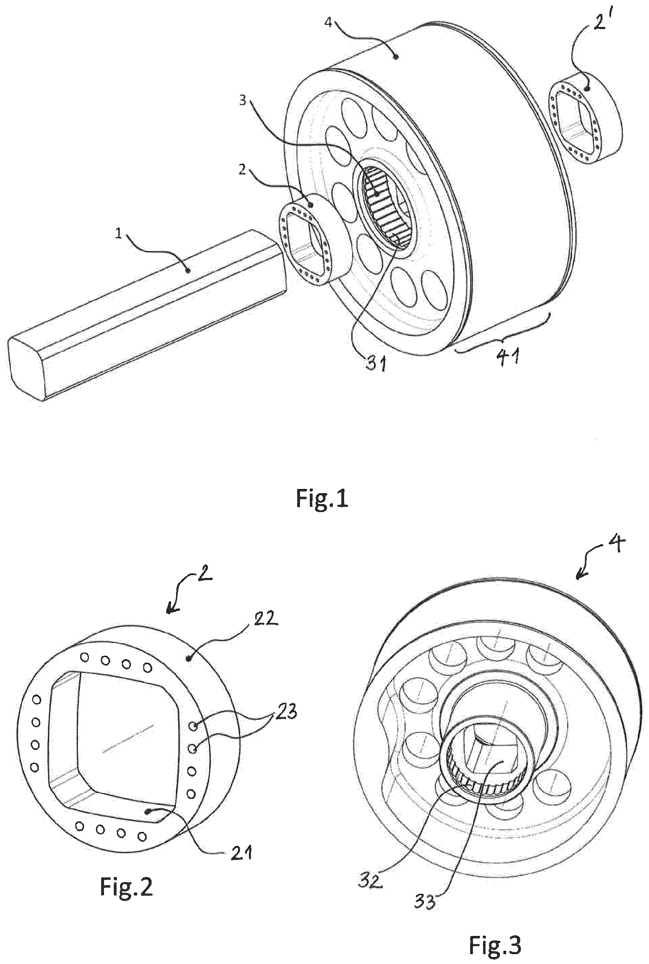

Die Figur 1 stellt die Einzelteile der erfindungsgemäßen Prägevorrichtung nacheinander aufgereiht in einer perspektivischen Darstellung dar. Die mit einem Drehantrieb (nicht gezeigt) verbundene Welle 1 hat einen polygonalen Querschnitt und ist im Wesentlichen als Vierkantprofil mit runden Fasen ausgeführt. Auf dem Außenumfang der Welle 1 sitzt die Kunststoffbuchse 2, deren Innenumfang die Außenumfangsform der Welle 1 nachbildet, also ebenfalls die polygonale Form eines Vierkantprofils mit runden Fasen hat.

Das Prägewerkzeug 4 enthält die Prägewalze, die an ihrer Zylinderaußenfläche 41 die Prägezeichen als reliefartige Vorsprünge (nicht gezeigt) aufweist, mit denen sich die gewünschten Blindenschriftzeichen in den Kartonzuschnitt prägen lassen. Ferner weist das Prägewerkzeug 4 eine zentrische Bohrung 3 auf, die an einem ersten Halteabschnitt 31 zur Aufnahme der Buchse 2 ausgelegt ist.

In der Figur 2 ist nochmals die Kunststoffbuchse 2 vergrößert dargestellt. Diese ist im Wesentlichen ringförmig, wobei aber nur der Außenumfang 22 eine glatte Zylinder-Mantelfläche hat und der Innenumfang 21 an die Querschnittsform der Drehwelle 1 (hier ein Vierkantprofil mit runden Fasen) angepasst ist. In axialer Richtung sind ferner im Querschnitt kreisförmige Durchgangslöcher 23 in den verdickten vier Randabschnitten der Buchse 2 eingebracht, die die radiale Verformbarkeit der Buchse erhöhen, ohne die Stabilität insgesamt einzuschränken.

Die Figur 3 zeigt das Prägewerkzeug 4 in der Seitenansicht von hinten, so dass auch die in der Figur 1 nicht dargestellte Rückseite zu sehen ist. Dadurch wird der weitere Verlauf der zentrischen Bohrung 3 sichtbar, die nach dem in der Figur 1 dargestellten Halteabschnitt 31 in einen Zwischenabschnitt 33 übergeht und dann in einem zweiten Halteabschnitt 32 endet, der zur Aufnahme einer zweiten, baugleichen Kunststoffbuchse 2' ausgelegt ist, die in der Figur 1 dargestellt ist. Während der Zwischenabschnitt 33 wiederum eine Querschnittsform aufweist, die an den Außenumfang der Drehwelle 1 angepasst ist, sind die Halteabschnitte 31, 32 im Wesentlichen kreisförmig, weisen aber eine nach innen ragende Zahnung auf. Diese Zahnung verbessert den Sitz der Kunststoffbuchsen 2, 2' in den zugehörigen Halteabschnitten 31, 32 und erlaubt besonders große Fertigungstoleranzen in der Herstellung der Buchsen 2, 2', aber auch der Halteabschnitte 31, 32.

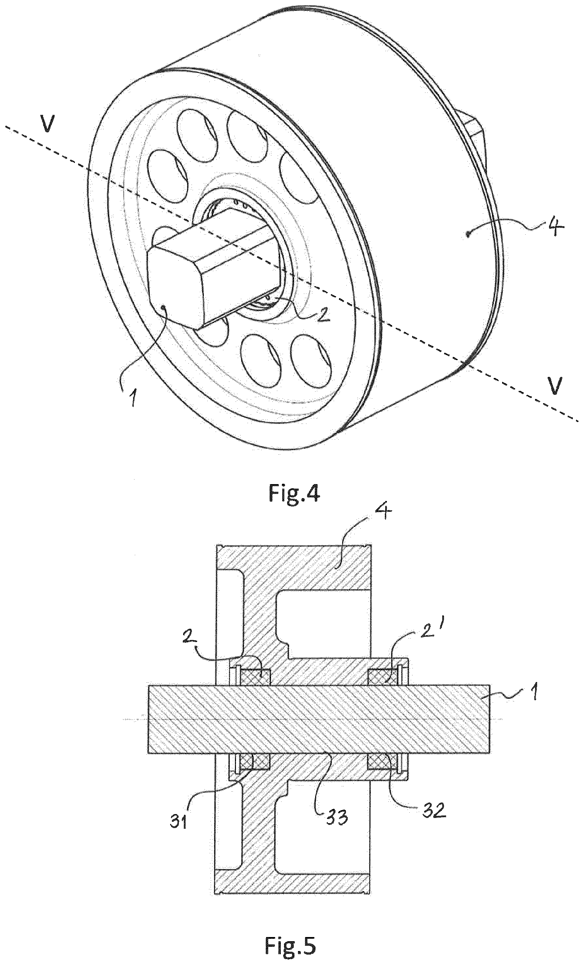

Wie in den Figuren 4 und 5 dargestellt, erlaubt die Buchse 2 eine form- und kraftschlüssige Verbindung zwischen der Drehwelle 1 und dem Prägewerkzeug 4 in Presspassung. Der Sitz der Buchse ist dabei so fest, dass sich das Prägewerkzeug 4 ohne messbares radiales Spiel mit der Drehwelle 1 dreht. Gleichzeitig erlauben die Haft- und Gleitreibungseigenschaften des Kunststoffmaterials der Buchsen 2, 2' aber noch ein axiales Verschieben des Prägewerkzeugs 4 entlang der Drehwelle 1, so dass bei einem Jobwechsel zum Umpositionieren des Prägewerkzeugs 4 nur wenig Montagezeit erforderlich ist.

Die Figur 5 zeigt die zusammengebaute Prägevorrichtung in einem Querschnitt entlang der Linie V-V der in der Figur 4 eingezeichneten Hilfslinie. Als Materialien für die Herstellung der Kunststoffbuchse 2 eignen sich insbesondere teilkristalline, thermoplastische Kunststoffe mit niedrigem Gleitreibungskoeffizienten, also beispielsweise Gusspolyamide. Das Prägewerkzeug 4 und die Drehwelle 1 sind im Wesentlichen aus Stahl hergestellt, gegen den das Kunststoffmaterial der Buchse einen möglichst geringen Reibungskoeffizienten µ aufweist.

Zusammenfassend betrifft die vorliegende Erfindung eine Prägevorrichtung, bei der eine Kunststoffbuchse 2, 2' die Lagerung eines Prägewerkzeugs 4 auf einer Drehwelle 1 verbessert. Die Größe der Kunststoffbuchse 2, 2' ist so bemessen, dass sie in Presspassung zwischen der Welle 1 und einem Halteabschnitt 31, 32 des Prägewerkzeugs 4 sitzt. Aufgrund der Materialeigenschaften und der Form der Kunststoffbuchse 2 dreht sich das Prägewerkzeug 4 radial spielfrei mit der Welle 1, lässt sich aber gleichzeitig axial entlang der Welle 1 verschieben. Damit lässt sich bei einer axialen Umpositionierung des Prägewerkzeugs 4 Zeit sparen, weil ein Lösen und ein erneutes Fixieren des Prägewerkzeugs 4 entfallen.

### Bezugszeichenliste

| | | | |
|---|---|---|---|
| **1** | Welle | **23** | Radialbohrungen |
| **2, 2'** | Kunststoff-Buchse | **31** | erster Halteabschnitt |
| **3** | zentrische Bohrung | **32** | zweiter Halteabschnitt |
| **4** | Prägewerkzeug | **33** | Zwischenabschnitt |
| **21** | Innenumfangswand | **41** | Zylinderaußenfläche |
| **22** | Außenumfangswand | | |

## Patentansprüche

1. Prägevorrichtung für eine Faltschachtelklebemaschine, mit
einer mit einem Drehantrieb verbundenen Welle (1),
einem auf der Welle (1) gelagerten Prägewerkzeug (4) und
einer zwischen der Welle (1) und dem Prägewerkzeug (4) angeordneten Buchse (2), die am Außenumfang (22) fest mit dem Prägewerkzeug (4) verbunden ist,
**dadurch gekennzeichnet, dass** die Buchse (2) aus Kunststoff hergestellt ist, wobei die Elastizität des Kunststoffs sowie Form und Material der Buchse (2) am Innenumfang (21) ein axiales Verschieben der Buchse (2) entlang der Welle (1) auch dann zulassen, wenn das Prägewerkzeug (4) in seiner radial fixierten Arbeitsposition ist, bei der es fest mit dem Außenumfang (22) der Buchse (2) verbunden ist und die Buchse (2) in Presspassung zwischen Prägewerkzeug (4) und Welle (1) sitzt.

2. Prägevorrichtung nach Anspruch 1, wobei die Welle (1) im Querschnitt ein Polygonprofil hat und vorzugsweise als Vierkantwelle ausgebildet ist, und wobei die Form der Buchse (2) an ihrem Innenumfang (21) mit der Querschnittsform der Welle (1) übereinstimmt.

3. Prägevorrichtung nach Anspruch 1 oder 2, wobei die Buchse (2) an ihrem Innenumfang (21) auf das Querschnittsprofil der Welle (1) abgestimmt ist.

4. Prägevorrichtung nach einem der vorstehenden Ansprüche, wobei die Buchse (2) an ihrem Außenumfang (22) im Wesentlichen die Form einer glatten Zylinder-Mantelfläche hat.

5. Prägevorrichtung nach einem der vorstehenden Ansprüche, wobei das Prägewerkzeug (4) eine zentrische Bohrung (3) mit einem Halteabschnitt (31) aufweist, in dem die Buchse (2) aufgenommen ist.

6. Prägevorrichtung nach einem der vorstehenden Ansprüche, wobei die Presspassung durch eine Übermaßpassung der Buchse (2) hinsichtlich der Querschnittsgröße des Halteabschnitts (31) in dem Prägewerkzeug (4) und/oder hinsichtlich der Querschnittsgröße des Außenumfangs der Welle (1) hergestellt ist.

7. Prägevorrichtung nach einem der Ansprüche 4 bis 6, wobei der Halteabschnitt (31) eine Querschnittsprofilierung hat, in die die Buchse (2) mit ihrem Außenumfang durch Presspassung kraft- oder formschlüssig eingreift.

8. Prägevorrichtung nach Anspruch 7, wobei die Querschnittsprofilierung des Halteabschnitts (31) eine Vielzahl in Umfangsrichtung äquidistant angeordneter und radial nach innen ragender Zähne aufweist.

9. Prägevorrichtung nach einem der Ansprüche 4 bis 8, wobei eine baugleiche zweite Buchse (2') in einem zweiten axialen Halteabschnitt (32) der zentrischen Bohrung (3) des Prägewerkzeugs (4) sitzt, und
die Bohrung (3) vorzugsweise axial zwischen dem ersten und dem zweiten Halteabschnitt (31, 32) einen Zwischenabschnitt (33) aufweist, dessen Größe auf das Querschnittsprofil der Welle (1) abgestimmt ist.

10. Prägevorrichtung nach einem der vorstehenden Ansprüche, wobei die Buchse (2) mehrere axiale Bohrungen (23) aufweist, die die Komprimierbarkeit der Buchse (2) in radialer Richtung erhöhen.

11. Prägevorrichtung nach Anspruch 1, wobei die Buchse (2) aus einem teilkristallinen, thermoplastischen Kunststoff mit einem Reibungskoeffizienten gegen Stahl von höchstens 0,5 hergestellt ist.

12. Prägevorrichtung nach Anspruch 11, wobei die Buchse (2) aus einem Gusspolyamid hergestellt ist.

## Claims

1. A stamping device for a folding box gluing machine, comprising
a shaft (1) connected to a rotation drive,
a stamping tool (4) supported on the shaft (1), and
a socket (2) arranged between the shaft (1) and the stamping tool (4) and fixedly connected to the stamping tool (4) at its outer circumference (22),
**characterised in that** the socket (2) is made of plastics, wherein the elasticity of the plastics as well as the shape and material of the socket (2) at its inner circumference (21) allows an axial displacement of the socket (2) along the shaft (1) even if the stamping tool (4) is in its radially fixed working position at which it is fixedly connected with the outer circumference (22) of the socket (2) and the socket (2) is seated in a tight fit between the stamping tool (4) and the shaft (1).

2. The stamping device of claim 1, wherein the shaft (1) has a polygonal profile in cross-section and is preferably formed as a four-cornered shaft, and wherein the shape of the socket (2) coincides at its inner circumference (21) with the cross-sectional shape of the shaft (1).

3. The stamping device of claim 1 or 2, wherein the socket (2) matches at its inner circumference (21) to the cross-sectional profile of the shaft (1).

4. The stamping device of any preceding claim, wherein the socket (2) has at its outer circumference (22) substantially the shape of a smooth cylinder shell surface.

5. The stamping device of any preceding claim, wherein the stamping tool (4) has a central bore (3) with a holding portion (31) into which the socket (2) is received.

6. The stamping device of any preceding claim, wherein the tight fit is achieved by an interference fit of the socket (2) regarding the cross-sectional size of the holding portion (31) in the stamping tool (4) and/or regarding the cross-sectional size of the outer circumference of the shaft (1).

7. The stamping device of any of claims 4 to 6, wherein the holding portion (31) has a cross-sectional profile into which the socket (2) tight fittingly engages with its outer circumference by a force fit or a shape fit.

8. The stamping device of claim 7, wherein the cross-sectional profile of the holding portion (31) comprises a plurality of teeth which are equally spaced in the circumferential direction and protrude inwards in a radial direction.

9. The stamping device of any of claims 4 to 8, wherein
an identically constructed second socket (2') is seated in a second axial holding portion (32) of the central bore (3) of the stamping tool (4), and
the bore (3) preferably comprises axially between the first and second holding portions (31, 32) an intermediate portion (33) whose size matches to the cross-sectional profile of the shaft (1).

10. The stamping device of any preceding claim, wherein the socket (2) comprises a plurality of axial bores (23) which enhance the compressibility of the socket (2) in the radial direction.

11. The stamping device of claim 1, wherein the socket (2) is made from a semi-crystalline thermoplastics material having a friction coefficient against steel of not more than 0.5.

12. The stamping device of claim 11, wherein the socket (2) is made from a cast polyamide.

## Revendications

1. Estampeur pour une machine destinée à coller des boîtes pliantes, avec
- un arbre (1) relié à un entraînement rotatif,
- un outil d'estampage (4) monté sur l'arbre (1) et
- une douille (2) disposée entre l'arbre (1) et l'outil d'estampage (4), qui est fermement assemblée à sa périphérie extérieure (22) à l'outil d'estampage (4),
**caractérisé en ce que** la douille (2) est fabriquée en matière plastique, dans lequel l'élasticité de la matière plastique ainsi que la forme et le matériau de la douille (2) à la périphérie intérieure (21) permettent un déplacement axial de la douille (2) le long de l'arbre (1), même lorsque l'outil d'estampage (4) se trouve dans sa position de travail radialement fixée, dans laquelle il est assemblé fermement à la périphérie extérieure (22) de la douille (2) et que la douille (2) se trouve en ajustement serré entre l'outil d'estampage (4) et l'arbre (1).

2. Estampeur selon la revendication 1, dans lequel l'arbre (1) présente en section transversale un profil polygonal et est de préférence formé par un arbre carré, et dans lequel la forme de la douille (2) à sa périphérie intérieure (21) correspond à la forme de la section transversale de l'arbre (1).

3. Estampeur selon la revendication 1 ou 2, dans lequel la douille (2) est accordée à sa périphérie intérieure (21) au profil de la section transversale de l'arbre (1).

4. Estampeur selon l'une quelconque des revendications précédentes, dans lequel la douille (2) présente à sa périphérie extérieure (22) essentiellement la forme d'une face latérale cylindrique lisse.

5. Estampeur selon l'une quelconque des revendications précédentes, dans lequel l'outil d'estampage (4) présente un alésage central (3) avec une partie de maintien (31), dans laquelle la douille (2) est logée.

6. Estampeur selon l'une quelconque des revendications précédentes, dans lequel l'ajustement serré est réalisé par un ajustement serré avec surdimension de la douille (2) par rapport à la grandeur de la section transversale de la partie de maintien (31) dans l'outil d'estampage (4) et/ou par rapport à la grandeur de la section transversale de la périphérie extérieure de l'arbre (1).

7. Estampeur selon l'une quelconque des revendications 4 à 6, dans lequel la partie de maintien (31) présente un profilage de la section transversale, dans lequel la douille (2) s'engage à force ou à emboîtement en ajustement serré avec sa périphérie extérieure.

8. Estampeur selon la revendication 7, dans lequel le profilage de la section transversale de la partie de maintien (31) présente une multiplicité de dents s'étendant radialement vers l'intérieur et disposées à équidistance en direction périphérique.

9. Estampeur selon l'une quelconque des revendications 4 à 8, dans lequel une seconde douille identique (2') est logée dans une seconde partie de maintien axiale (32) de l'alésage central (3) de l'outil d'estampage (4), et l'alésage présente de préférence axialement entre la première et la seconde parties de maintien (31, 32) une partie intermédiaire (33), dont la grandeur est accordée au profil de la section transversale de l'arbre (1).

10. Estampeur selon l'une quelconque des revendications précédentes, dans lequel la douille (2) présente plusieurs alésages axiaux (23), qui augmentent la compressibilité de la douille (2) en direction radiale.

11. Estampeur selon la revendication 1, dans lequel la douille (2) est fabriquée en une matière plastique thermoplastique partiellement cristalline avec un coefficient de frottement contre l'acier de 0,5 au maximum.

12. Estampeur selon la revendication 11, dans lequel la douille (2) est fabriquée en un polyamide moulé.
